# FASCICULE DE BREVET EUROPEEN

(11) **EP 3 802 036 B1**
(45) Date de publication et mention de la délivrance du brevet: **10.08.2022**
(21) Numéro de dépôt: 19733851.0
(22) Date de dépôt: 20.05.2019
(51) Int. Cl.: B29B 7/18, B29B 7/22, B29B 7/74, B29C 48/03, B29C 48/25, B29C 48/50

(54) **ROTOR AVEC UN DISPOSITIF ANTI-USURE ET SON MOYEN DE FIXATION**
ROTOR MIT VERSCHLEISSSCHUTZVORRICHTUNG UND BEFESTIGUNGSMITTEL DAFÜR
ROTOR WITH ANTI-WEAR DEVICE AND MEANS FOR ATTACHING THE SAME

(30) Priorité: 24.05.2018 FR 1854367
(43) Date de publication de la demande: 14.04.2021
(73) Titulaire: COMPAGNIE GENERALE DES ETABLISSEMENTS MICHELIN, 63000 Clermont-Ferrand (FR)
(72) Inventeur: DUSSARDIER, Bruno, 63040 Clermont-Ferrand Cedex 9 (FR); CARLAVAN, Cédric, 63040 Clermont-Ferrand Cedex 9 (FR); LIAIS, Yves, 63040 Clermont-Ferrand Cedex 9 (FR); WEBER, Crescence, 63040 Clermont-Ferrand Cedex 9 (FR)
(74) Mandataire: Roussy, Delphine
(86) Numéro de dépôt international: PCT/FR2019/051143
(87) Numéro de publication internationale: WO 2019/224466

(56) Documents cités:
- EP-A2- 0 230 333
- CN-U- 202 528 336
- CN-U- 204 525 822
- CN-Y- 201 313 354
- DE-C1- 3 943 344
- US-A- 3 841 805
- US-A- 5 368 383

## Description

### DOMAINE TECHNIQUE

L'invention concerne de manière générale la production de mélanges de caoutchouc et des pneumatiques de véhicule préparés à partir de ceux-ci. Plus particulièrement, l'invention concerne un dispositif anti-usure pour un rotor utilisé dans un mélangeur d'un mélange de caoutchouc.

### CONTEXTE

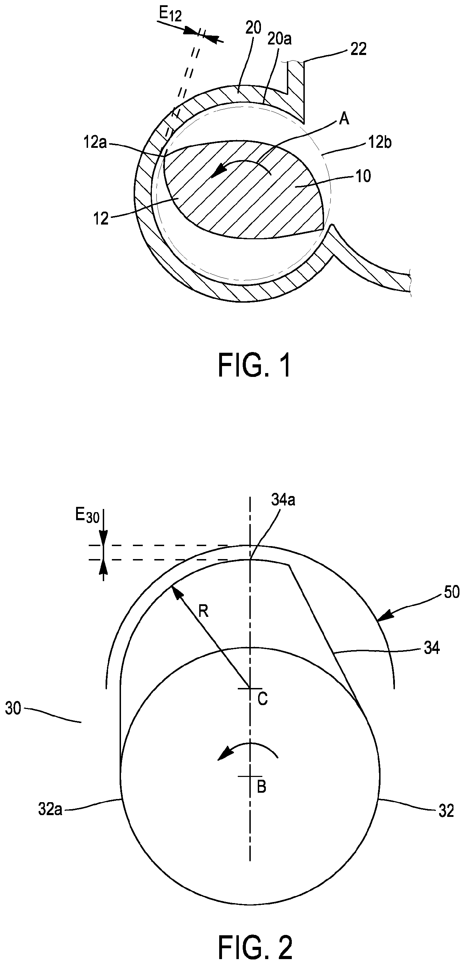

Dans le domaine de fabrication d'élastomère, des mélangeurs internes sont utilisés pour le mélangeage de matières premières. Par « mélangeur interne » (ou « mélangeur » ou « MI »), on entend une machine constituée d'un pilon métallique et de deux demi-cuves (ou « cuves ») métalliques, chacune contenant un rotor métallique avec une ou plusieurs pales (par exemple, une machine de type Banbury ou Intermix pour polymères). Lorsque les matières d'un mélange sont mélangées, un élastomère en cours de fabrication subit des contraintes importantes. En se référant à la figure 1, ce phénomène est expliqué en référence à un rotor 10 qui est disposé dans une cuve 20 et qui tourne dans le sens de la flèche A, le rotor 10 faisant partie d'une paire de rotors disposées en parallèle pour qu'ils puissent tourner dans des sens mutuellement opposés. Le rotor 10 possède des pâles 12, et chaque pâle possède un sommet 12a. Lors de la rotation du sommet 12a, celui-ci va décrire une trajectoire circulaire 12b comme représenté dans la figure 1. Un entrefer E₁₂ est défini entre la paroi 20a d'une cuve 20 et la trajectoire circulaire 12b. Les matières premières du mélange de caoutchouc, qui entrent dans la cuve 20 par une entrée 22, passent dans l'entrefer E₁₂ entre les pales des rotors et la paroi de chaque cuve. Les matières premières passent le sommet 12a où des forces de cisaillement importantes sont réalisées ce qui va générer les zones usées. Des exemples représentés dans l'art antérieur comprennent le brevet US5,368,383 (divulguant un appareil pour la production de mélanges de caoutchouc appelés « masterbatch »).

Ce phénomène est présent sur les rotors du type « monobloc » dans un mélangeur interne où il est constaté que les zones usées sont toujours situées au même endroit des pales des rotors. En se référant à la figure 2, un rotor représentatif d'un type monobloc est représenté par le rotor 30 qui est disposé dans une cuve 50 (le rotor 30 étant divulgué par le brevet FR2632873). Le rotor 30 comporte un arbre axial 32 avec un axe de rotation autour duquel le rotor est mis en rotation dans le sens de la flèche B. L'arbre axial 32 a une surface circonférentielle 32a à partir de laquelle une ou plusieurs pales 34 s'étendent radialement. Dans un plan perpendiculaire à l'axe de rotation du rotor 30, une courbure du profil de la pale 34 est défini par un centre de courbure C et un rayon de courbure R. Cette courbure correspond à une courbure de la paroi de la cuve 50. Une arête 34a de la pale 34 définit, avec la paroi de la cuve 50, un entrefer E₃₀ le long duquel les matières du mélange de caoutchouc passent (comme décrit par rapport à l'entrefer E₁₂ de la figure 1).

Une zone de très faible longueur existe le long de l'entrefer E₃₀ où le niveau de travail réalisé est très intensif. En réalisant les formules de caoutchouc actuelles, qui évoluent vers des taux de charges renforçantes de plus en plus élevés (par exemple, des taux de noir de carbone et de silice), les élastomères fabriqués sont très abrasifs pour les surfaces métalliques des mélangeurs internes. Dans le même temps, les cycles de mélangeage sont optimisés afin de garantir une productivité maximale.

L'usure n'est pas uniforme : le rotor lui-même est plus érodé, et certaines parties du rotor plus proéminentes, comme les pâles, sont encore plus érodées. Ceci se traduit par le développement de jeux indésirables entre les pales et la paroi qui ont un impact négatif sur la productivité et qualité du mélange de caoutchouc. La conséquence de ces évolutions est un problème d'usure prématurée qui est constaté sur des rotors de mélangeur. L'usure constatée peut aller jusqu'à plusieurs millimètres, alors que le reste des surfaces métalliques du mélangeur ne subit pas le même niveau d'usure. La durée de vie de certaines pièces mécaniques comme les rotors est réduite parfois jusqu'à 50%. Les temps d'arrêt pour changer ces rotors (les montages et les démontages) sont longs et coûteux et nécessitent l'arrêt complet du mélangeur. Les productions d'élastomères semi-finis ne peuvent pas être réalisées comme prévu.

Parmi les solutions reconnues pour limiter ce phénomène, il existe le dispositif divulgué par la publication CN201389929Y. Ce dispositif concerne un ou plusieurs dispositifs anti-usures fixés à la surface circonférentielle d'une cuve et/ou le long d'une surface d'une pale d'un rotor usiné dans une seule pièce. Toutefois, chaque rotor connu est caractérisé par le profil des pales (c.-à-d., une section plane, prise perpendiculairement à l'axe de rotation du rotor, qui définit le profil des pales comme représenté par la figure 1) et par le positionnement des pales sur une surface du rotor. Cette solution ne décrit que la mise en place directe des dispositifs anti-usures sur un rotor usiné dans une seule pièce sans expliquer les impacts potentiels sur sa géométrie et sur la performance correspondante de mélangeage du caoutchouc.

De plus, contrairement à la solution divulguée par la publication CN201389929, l'ajout d'un dispositif anti-usure diminue l'efficacité de refroidissement. Or, il est particulièrement important de pouvoir refroidir le sommet de la pale, car ici l'augmentation de la température est plus élevée que dans les autres régions du rotor. Pour cette raison, les rotors sont souvent équipés de systèmes de refroidissement sous forme de canaux géométriques percés à l'intérieur du rotor permettant de maîtriser la température du mélange pendant le cycle de mélangeage, cette température peut atteindre environ 150° C à 170° C.

Une autre solution de l'art antérieur est divulguée par le document DE3943344 (divulguant une unité de vis sans fin d'extrudeuse ou de plastifieuse, comprenant une unité résistante à l'usure sur la tête de la section de la vis sans fin).

Pour préserver la dispersion du caoutchouc, la performance de mélangeage du caoutchouc et la qualité du mélange de caoutchouc, l'invention concerne donc la mise en place d'un dispositif anti-usure démontable sur les pales de rotors dans les zones où l'usure intervient. Le dispositif anti-usure comprend une plaque qui est fixée d'une façon détachable à un rotor adapté pour réaliser sa fixation. Lors son attachement avec le rotor, la plaque offre un moyen de remplacement facile d'une partie de rotor usée sans changement de la géométrie de rotor. Le rotor est donc constitué de deux pièces, y compris d'une pièce facilement remplaçable, qui fonctionnent comme un rotor d'une seule pièce et à moindre coût.

### RÉSUMÉ

L'invention concerne un rotor pour utilisation dans un mélangeur interne comportant une cuve de mélangeage dans laquelle tourne le rotor. Le rotor comprend une ou plusieurs pales, chaque pale avec un sommet dont le profil a une courbure prédéfinie. Le rotor comprend aussi un dispositif anti-usure fixée de façon détachable au sommet d'au moins une pale, le dispositif anti-usure comportant une plaque avec un profil défini par une surface antérieure avec une courbure complémentaire à celle du sommet et une surface supérieure avec une courbature complémentaire à celle d'une paroi de la cuve pour définir, entre eux, une zone d'écart minimum qui permet un passage du mélange entre la plaque et la paroi de la cuve.

Dans certains modes de réalisation, le profil de la plaque est défini par un rayon de courbure de la plaque qui est plus en plus progressif dans le sens des aiguilles d'une montre pour que le profil de la plaque ressemble à une spirale.

Selon l'invention, la plaque comprend un ou plusieurs canaux de refroidissement qui s'étendent axialement le long d'une longueur de la plaque, les canaux de refroidissement étant disposés le long du profil de la plaque et se raccordant à des conduits d'alimentation qui acheminent un liquide de refroidissement correspondant à la plaque en provenance d'un conduit principal du rotor.

Dans certains modes de réalisation, le rotor comprend en outre un moyen d'étanchéité.

Dans certains modes de réalisation, le moyen d'étanchéité comprend un joint torique qui est mis dans une gorge correspondante. Dans certains modes de réalisation, la gorge est une gorge trapézoïdale.

Dans certains modes de réalisation, le rotor comprend en outre une ou plusieurs vis de maintien insérées dans la plaque pour s'engager dans le rotor.

Dans certains modes de réalisation, le rotor comprend en outre un système d'accrochage mécanique.

Dans certains modes de réalisation, le système d'accrochage mécanique comprend une clavette de positionnement et un ou plusieurs systèmes de roue et vis sans fin. Dans certains modes de réalisation, la clavette de positionnement comprend une clavette parallèle avec une surface supérieure qui s'engage un renforcement correspondant de la surface antérieure de la plaque, la clavette de positionnement s'engageant dans une rainure correspondante du sommet.

Dans certains modes de réalisation, le système de roue et vis sans fin comprend une roue dentée, un élément de blocage axial vissé et une vis tangentiellement insérée dans le rotor et bloquée axialement par l'élément de blocage axial vissé pour que la rotation de la vis fasse tourner la roue dentée.

Dans certains modes de réalisation, chaque vis de maintien est constituée d'une tête de vis placée vers la surface supérieure de la plaque.

Dans certains modes de réalisation, le rotor comprend en outre un bouchon vissé avec une structure cylindrique comportant un filetage qui s'engage dans un taraudage correspondant du rotor. Dans certains modes de réalisation, le bouchon vissé comprend un élément de serrage qui s'étend d'une surface extérieure de la structure cylindrique pour faciliter le serrage du bouchon vissé par rapport au rotor. Dans certains modes de réalisation, chaque bouchon vissé est placé vers la surface supérieure de la plaque.

Dans certains modes de réalisation, le rotor comprend deux pales, et les pales sont inclinées dans des sens mutuellement opposés.

L'invention concerne aussi un mélangeur interne comportant au moins une cuve de mélangeage dans laquelle tourne un rotor comme divulgué.

D'autres aspects de l'invention vont devenir évidents grâce à la description détaillée suivante.

### BRÈVE DESCRIPTION DES DESSINS

La nature et les divers avantages de l'invention vont devenir plus évidents à la lecture de la description détaillée qui suit, conjointement avec les dessins annexés, sur lesquels les mêmes numéros de référence désignent partout des parties identiques, et dans lesquels :
La figure 1 représente une section plane, prise perpendiculairement à l'axe de rotation du rotor d'un mélangeur interne connu.
La figure 2 représente une vue d'un profil d'un rotor monobloc de l'art antérieur.
La figure 3 représente une vue partielle éclatée d'un rotor et un dispositif anti-usure de l'invention.
La figure 4 représente une vue en perspective d'un rotor représentatif avec lequel le dispositif anti-usure de la figure 3 est utilisé.
La figure 5 représente une vue en perspective d'un autre rotor représentatif avec lequel le dispositif anti-usure de la figure 3 est utilisé.
La figure 6 représente une vue transparente en perspective, et la figure 7 représente une vue en perspective partielle, du rotor et du dispositif anti-usure de l'invention.
La figure 8 représente une vue transparente partielle, et la figure 9 représente une vue en coupe partielle, du rotor et du dispositif anti-usure de l'invention.
La figure 10 représente une vue en coupe partielle d'un mode de réalisation de l'invention qui utilise un moyen d'étanchéité entre le rotor et le dispositif anti-usure.
La figure 11 représente une vue en coupe partielle du rotor et du dispositif anti-usure fixée avec un système d'accrochage mécanique.
La figure 12 représente un système de roue et vis sans fin du système d'accrochage mécanique de la figure 11.
La figure 13 représente une vue en coupe d'une vis d'un mode de réalisation du système de roue et vis de la figure 12.
Les figures 14 et 15 représentent un mode de réalisation de l'invention avec un bouchon de serrage.

### DESCRIPTION DÉTAILLÉE

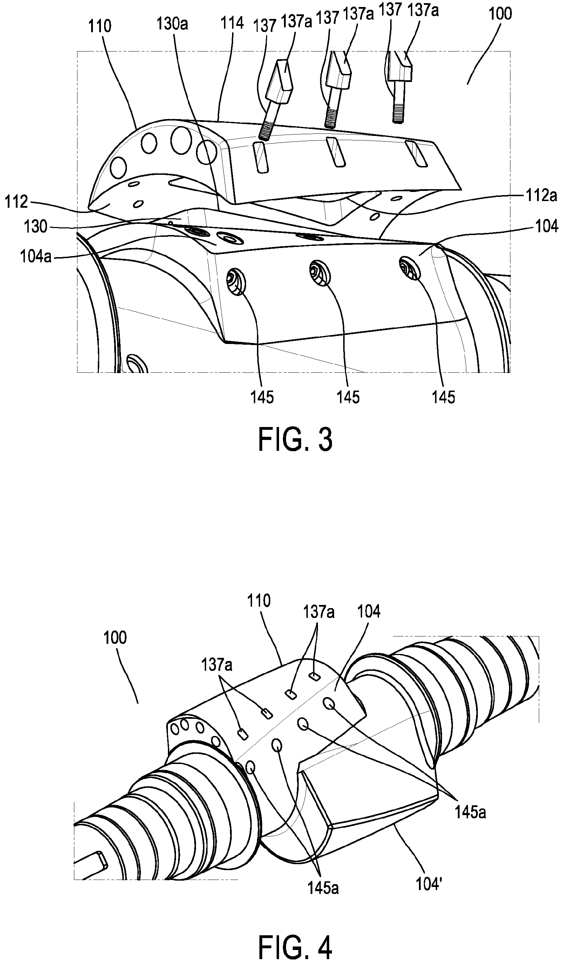

En se référant maintenant aux figures, sur lesquelles les mêmes numéros identifient des éléments identiques, la figure 3 représente un rotor 100 fourni avec un dispositif anti-usure de façon à accroître la durée de vie utile du rotor et de façon à accroître sa capacité à résister à l'abrasion par le mélange de caoutchouc. Le rotor 100 est représenté comme un rotor monobloc comme décrit au-dessus, celui-ci avec une ou plusieurs pales 104. Il est entendu que le rotor peut être choisi d'une configuration connue dans le métier (par exemple, le rotor peut être un rotor tangentiel, un rotor engrenant ou un rotor équivalent). Le rotor 100 est fabriqué d'un matériau métallique comme l'acier (l'acier normal ou l'acier haute résistance). Il est entendu qu'un autre métal ou un autre matériau équivalent peut être utilisé (par exemple, l'inox, le titane, etc.). Un revêtement de protection chimique connu peut être ajouté sur n'importe quelle partie du rotor 100.

Le placement et la fixation du dispositif anti-usure sont réalisés en référence à un sommet 104a de la pale 104. Le rotor 100 est usiné pour créer un sommet 104a de la pale 104 qui permet le raccordement de la plaque 110. Dans un plan perpendiculaire à l'axe de rotation du rotor 100, une courbure d'un profil du sommet 104a est définie par un centre de courbure du rotor et un rayon de courbure de rotor.

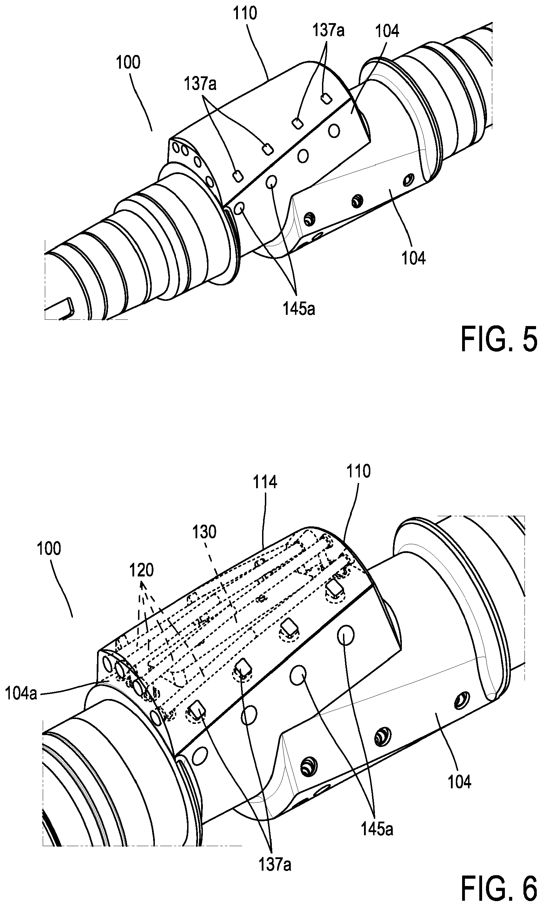

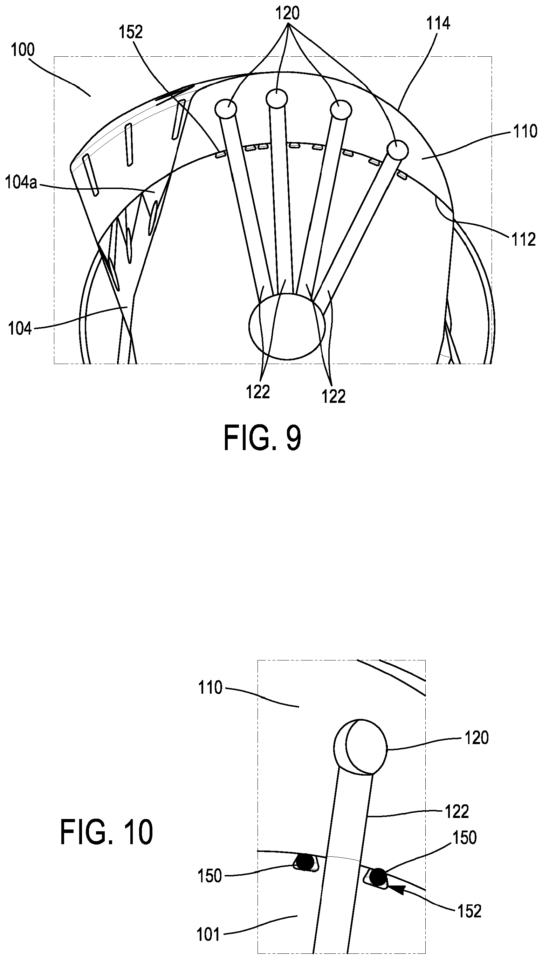

En se référant encore à la figure 3 et en outre aux figures 4 et 5, et aussi à la figure 9, le dispositif anti-usure comporte une plaque 110 qui est fixée de façon détachable sur le rotor 100. Un profil de la plaque 110 est défini par une surface antérieure 112 et une surface supérieure 114 de la plaque. La surface antérieure 112 a une courbure complémentaire à celle du sommet 104a pour faciliter la mise en place directe de la plaque 110 sur la pale 104 (et/ou sur la pale 104' dans des modes de réalisation). Dans la figure 9, il est évident que les surfaces de jonction 112 et 104a peuvent être circulaires ce qui facilitent l'usinage du rotor 100 et de la plaque 110.

La surface supérieure 114 a une courbature complémentaire à celle de la paroi de la cuve pour définir, entre eux, une zone d'écart minimum qui permet un passage du mélange entre la plaque 110 et la paroi de la cuve. Dans un plan perpendiculaire à l'axe de rotation du rotor 100, le profil de la plaque 110 est défini par un centre de courbure de la plaque et un rayon de courbure de la plaque prédéfinis. Dans le mode de réalisation représenté, le profil de la plaque 110 est défini par un rayon de courbure qui est de plus en plus progressif dans le sens des aiguilles d'une montre pour que le profil de la plaque ressemble à une spirale (c.-à-d., la courbe formée le long de la surface antérieure 112 se tourne autour d'un axe longitudinale).

Le profil de la plaque 110 est donc complémentaire à la géométrie du rotor et à la géométrie de la cuve comme entendu par un homme du métier. En se référant à la figure 4, le rotor représentatif 100 comporte une pale 104 usinée avec un dispositif anti-usure fixé et une deuxième pale 104' non-usinée, et les deux pales comportent des profils identiques. En se référant à la figure 5, le rotor représentatif 100 comporte deux pales 104 usinées avec un dispositif anti-usure fixé à une première pale. La deuxième pale est usinée pour assurer la fixation immédiate d'un dispositif anti-usure (non-représenté) pour que les deux pales comportent des profils identiques. Pour les deux rotors représentatifs 100, un profil du rotor ressemble au profil d'un rotor constitué d'une seule pièce.

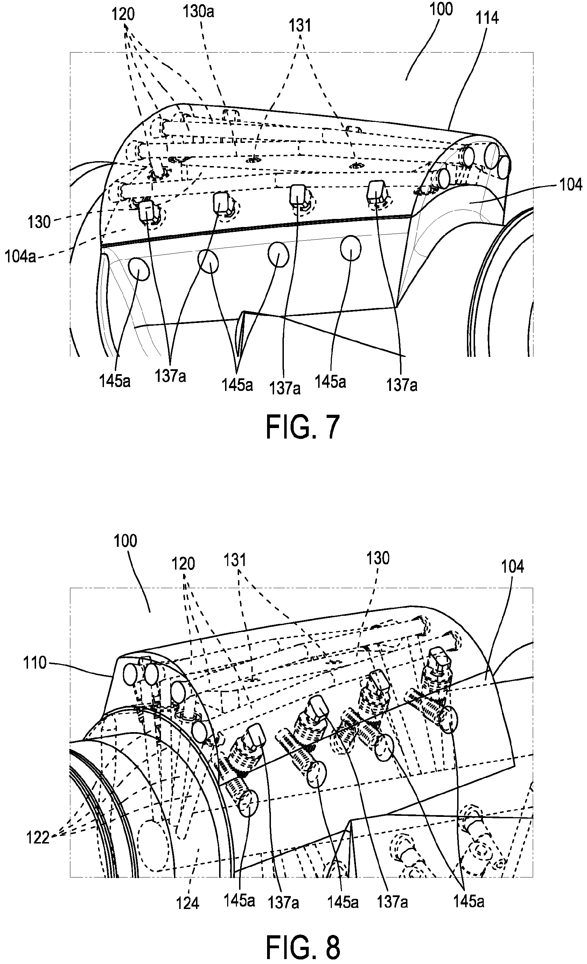

En se référant encore aux figures 3 à 5 et en outre aux figures 6 à 9, la plaque 110 comporte des canaux de refroidissement 120 qui s'étendent axialement le long d'une longueur de la plaque 110. Les canaux de refroidissement 120 sont disposés le long du profil de la plaque 110 (voir la figure 9) et se raccordent à des conduits d'alimentation 122. Les conduits d'alimentation 122 acheminent un liquide de refroidissement correspondant (tel que de l'eau ou un autre fluide de refroidissement connu) à la plaque 110 en provenance d'un conduit principal 124 du rotor 100 (voir la figure 8). Les canaux de refroidissement 120, les conduits d'alimentation 122 et le conduit principal 124 constituent ensemble un circuit de régulation à l'intérieur de la plaque 110 pour régler la température du mélange pendant un cycle de mélangeage comme entendu par l'homme de métier. Pour le mode de réalisation représenté, la plaque 110 comporte quatre canaux de refroidissement 120, mais le nombre de canaux de refroidissements peut être adapté si besoin.

Dans certains modes de réalisation, l'invention concerne aussi des systèmes d'étanchéité entre la plaque 110 et le rotor 100. En se référant encore à la figure 9 et en outre à la figure 10, un mode de réalisation de l'invention comporte un moyen d'étanchéité constitué d'un joint torique 150 qui est mis dans une gorge 152 pour réaliser l'étanchéité par rapport à un conduit d'alimentation 122. Dans ce mode de réalisation, la gorge 152 est une gorge trapézoïdale pour ne pas perdre le joint lors des montages/démontages du dispositif anti-usure. Il est bien entendu que le joint torique peut être remplacé par un joint équivalent ou par un autre moyen d'étanchéité équivalent. Il est aussi entendu que la gorge peut être formée avec une autre géométrie utile.

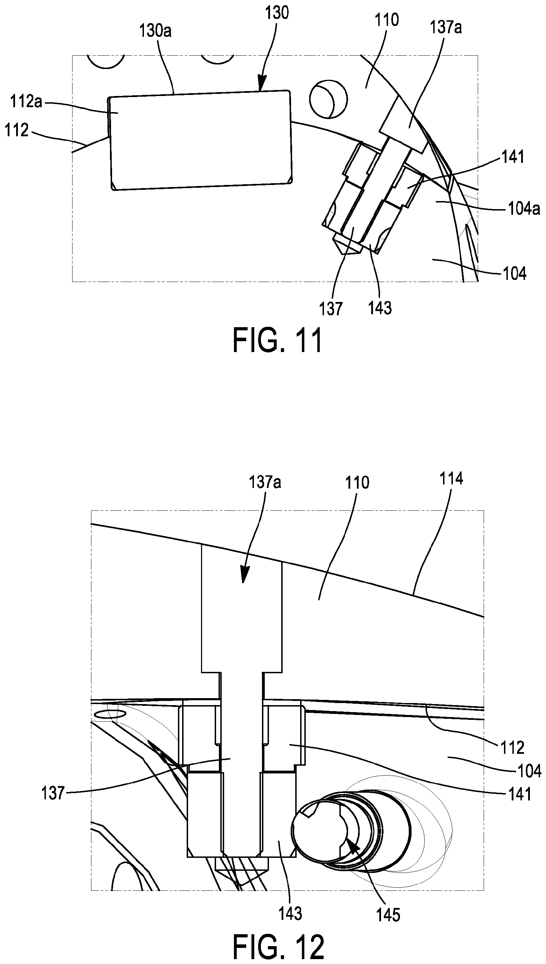

En se référant encore aux figures 3 à 10 et en outre aux figures 11 à 13, la plaque 110 est fixée au sommet 104a de la pale 104 de façon détachable. Pour réaliser une transmission de couple, cette fixation est faite par un système d'accrochage mécanique comportant une clavette de positionnement (ou « clavette ») 130 et un ou plusieurs systèmes de roues et vis sans fin. Il est entendu que d'autres systèmes de fixation mécaniques de type assemblage par vis peuvent être utilisés.

La clavette 130 est représentée par une clavette parallèle avec une longueur totale prédéterminée étant fixée au sommet 104a par des vis de clavetage 131 (voir les figures 6 et 7). La clavette 130 s'engage dans une rainure correspondante (pas représentée) du sommet 104a pour qu'une surface supérieure 130a de la clavette puisse s'engager un renforcement correspondant 112a de la surface antérieure 112 de la plaque 110. Il est entendu que le clavetage peut être réalisé par une clavette équivalente (par exemple, une clavette parallèle de type A, B ou C ou une clavette disque).

Pour fixer de façon détachable la plaque 110 sur le rotor 100, des systèmes de roue et vis sans fin sont utilisés pour serrer des vis de maintien 137 correspondants. Les vis de maintien 137 sont insérées dans la plaque 110 pour s'engager dans le rotor 100 (par exemple, en s'engageant dans un élément de fixation vissé 141 du rotor 100). Chaque vis de maintien 137 est constituée d'une tête de vis 137a qui épouse parfaitement la forme extérieure de la surface supérieure 114 de la plaque 110, évitant toutes zones de rétention de mélange (voir, par exemple, les figures 6 et 7).

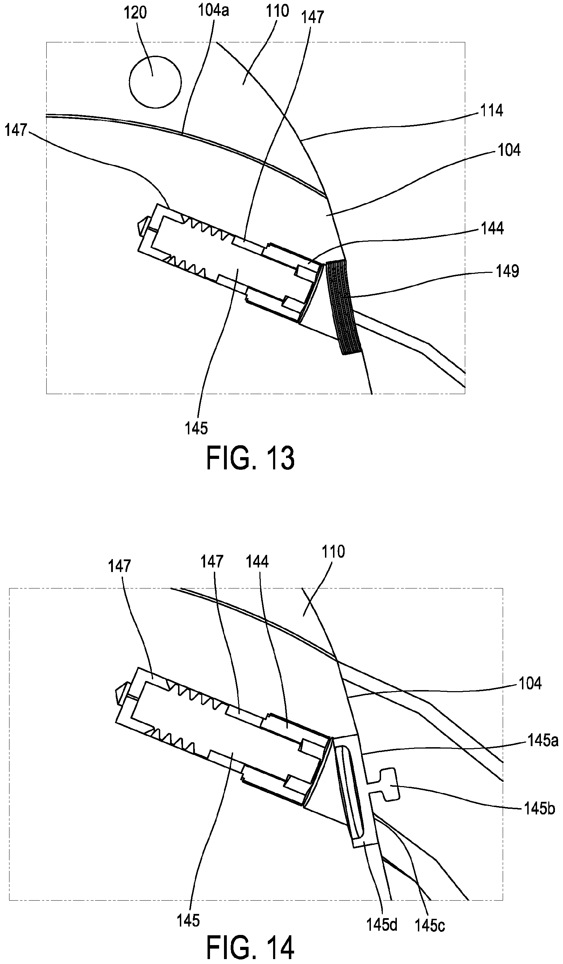

Le système de roue et vis sans fin comporte une roue dentée 143 (voir les figures 11 et 12) avec un élément de blocage axial vissé 144 et une vis 145 (voir les figures12 et 13). Le système de roue et vis sans fin peut comporter des éléments de guidage 147 comme entendu par un homme du métier. La vis 145 est tangentiellement insérée dans le rotor 100 et bloquée axialement par l'élément de blocage axial vissé 144 pour que la rotation de la vis 145 fasse tourner la roue dentée 143. L'intérieur de la roue dentée 143 dispose d'un taraudage dans lequel vient s'engrener la vis 145. Dans cette configuration, la rotation de la roue dentée va entrainer le serrage et le desserage de la vis 137, permettant la fixation ou la libération de la plaque 110 et donc son remplacement si besoin.

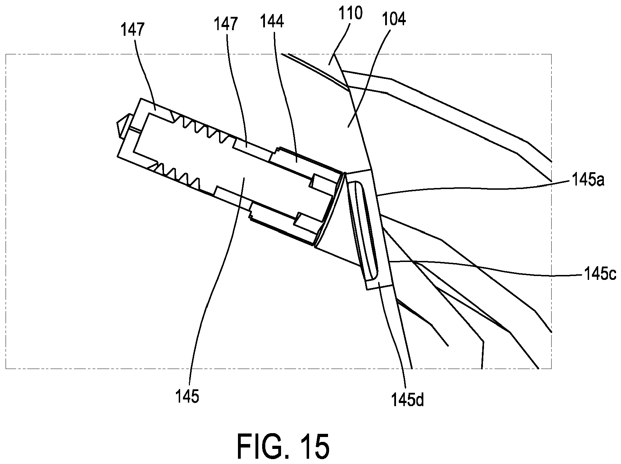

En se référant encore aux figures 14 et 15, dans un mode de réalisation de l'invention, chaque vis 145 est constituée d'un bouchon vissé 145a qui protège la vis (voir, par exemple, les figures 6 et 7). Le bouchon vissé 145a comprend un élément de serrage 145b qui s'étend d'une surface extérieure 145c d'une structure cylindrique 145d (voir la figure 14). La structure cylindrique 145d comporte un filetage qui va être vissé dans un taraudage correspondant 149 du rotor 100 (voir la figure 13). L'élément de serrage 145b peut comporter n'importe quelle géométrie pour faciliter le serrage du bouchon vissé 145a (par exemple, une géométrie hexagonale peut être choisie). Pour assurer une surface lisse de la surface extérieure 145c, l'élément de serrage 145b se casse lorsque le serrage atteint le couple désiré (voir la figure 15). Lors du desserrage d'ensemble roue et vis sans fin, le bouchon 145a sera détruit afin de permettre l'accès à la vis 145.

Les têtes de vis 137a et les bouchons 145a sont placés vers la surface supérieure 114 de la plaque 110 en fonction de son profil. Les têtes de vis 137a et les bouchons 145a font eux-mêmes parties du dispositif anti-usure.

L'ajout d'un dispositif anti-usure comme la plaque 110 permet d'obtenir la même géométrie qu'un rotor d'une seule pièce. Ainsi, les effets de la micro-dispersion des additifs (fournie par le passage entre la pale et la paroi de la cuve) et la distribution des composants (réalisé par le transfert de masse de matière entre les cuves le long du rotor 100 dans chaque cuve) ne sont pas compromis.

Lorsque la plaque 110 est usée (soit avec les têtes et les bouchons soit sans têtes et bouchons), une intervention in situ est réalisée pour la changer. En outre, le fait de changer plus facilement les parties usées des rotors, va permettre un changement plus fréquent et donc limiter les variations d'entrefer entre la paroi de la cuve et le rotor. Les temps d'arrêt et les coûts associés sont ainsi limités en même temps que la dispersion du caoutchouc, la performance de mélangeage du caoutchouc et la qualité du mélange de caoutchouc sont préservées.

Le problème d'usure est résolu simplement avec un dispositif anti-usure qui est facilement usiné et personnalisé en fonction des dimensions précises du rotor. La plaque divulguée peut être appliquée aux rotors nouvellement achetés ainsi qu'aux rotors déjà utilisés avec un temps de remise en service très court. Les rotors de rechange nécessaires pour garantir une production industrielle sans perte de production peuvent se limiter uniquement aux dispositifs d'usure de l'invention. Les plaques et les rotors peuvent être fournis dans un ou plusieurs kits comprenant au moins une plaque complémentaire avec chaque rotor. Les plaques sont donc disponibles comme besoin pour réduire le temps et l'investissement associés avec les montages/démontages attendus. En plus, l'utilisation de plaques en sommet de rotor ne modifie pas les paramètres d'utilisation du rotor.

L'ajout de certains revêtements n'est pas possible pour les rotors du type monobloc ni pour les autres types de rotors connus avec une taille et un poids empêchant des revêtements (par exemple, dans des fours sous vide dont les dimensions sont limitées). L'invention divulguée permet de mettre sur le dispositif anti-usure des revêtements qui comprennent, par exemple, des dépôts physiques en phase vapeur (PVD) (par exemple, de nitrure de chrome), des dépôts chimiques en phase vapeur (CVD) (par exemple, le nitrure de titane) et leurs équivalentes. Les dispositifs avec des revêtements déjà incorporés peuvent être ajoutés dans des kits pour donner plus de choix aux utilisateurs.

Les termes « au moins un(e) et « un(e) ou plusieurs » sont utilisés de manière interchangeable. Les gammes qui sont présentées comme se situant « entre a et b » englobent les valeurs « a » et « b ».

## Revendications

1. Un rotor (100) pour utilisation dans un mélangeur interne comportant une cuve de mélangeage dans laquelle tourne le rotor, le rotor comprenant :
une ou plusieurs pales (104), chaque pale avec un sommet (104a) dont le profil a une courbure prédéfinie ; et
un dispositif anti-usure comportant une plaque (110) avec un profil défini par une surface antérieure (112) avec une courbure complémentaire à celle du sommet (104a) et une surface supérieure (114) avec une courbature complémentaire à celle d'une paroi de la cuve pour définir, entre eux, une zone d'écart minimum qui permet un passage du mélange entre la plaque (110) et la paroi de la cuve ;
**caractérisé en ce que** le dispositif anti-usure est fixé de façon détachable au sommet (104a) d'au moins une pale, et
**caractérisé en ce que** la plaque comprend un ou plusieurs canaux de refroidissement (120) qui s'étendent axialement le long d'une longueur de la plaque (110), les canaux de refroidissement étant disposés le long du profil de la plaque (110) et se raccordant à des conduits d'alimentation (122) qui acheminent un liquide de refroidissement correspondant à la plaque (110) en provenance d'un conduit principal (124) du rotor (100).

2. Le rotor de la revendication 1, dans lequel le profil de la plaque (110) est défini par un rayon de courbure de la plaque qui est plus en plus progressif dans le sens des aiguilles d'une montre pour que le profil de la plaque ressemble à une spirale.

3. Le rotor de la revendication 2, comprenant en outre un moyen d'étanchéité.

4. Le rotor de la revendication 3, dans lequel le moyen d'étanchéité comprend un joint torique (150) qui est mis dans une gorge (152) correspondante.

5. Le rotor de la revendication 4, dans lequel la gorge (152) est une gorge trapézoïdale.

6. Le rotor de l'une quelconque des revendications précédentes, comprenant en outre une ou plusieurs vis de maintien (137) insérées dans la plaque (110) pour s'engager dans le rotor (100).

7. Le rotor de la revendication 6, comprenant en outre un système d'accrochage mécanique.

8. Le rotor de la revendication 7, dans lequel le système d'accrochage mécanique comprend une clavette de positionnement (130) et un ou plusieurs systèmes de roue et vis sans fin.

9. Le rotor de la revendication 8, dans lequel la clavette de positionnement (130) comprend une clavette parallèle avec une surface supérieure (130a) qui s'engage un renforcement correspondant (112a) de la surface antérieure (112) de la plaque (110), la clavette de positionnement s'engageant dans une rainure correspondante du sommet (104a).

10. Le rotor de la revendication 8 ou de la revendication 9, dans lequel le système de roue et vis sans fin comprend une roue dentée (143), un élément de blocage axial vissé (144) et une vis (145) tangentiellement insérée dans le rotor (100) et bloquée axialement par l'élément de blocage axial vissé (144) pour que la rotation de la vis (145) fasse tourner la roue dentée (143).

11. Le rotor de l'une quelconque des revendications 6 à 10, dans lequel chaque vis de maintien (137) est constituée d'une tête de vis (137a) placée vers la surface supérieure (114) de la plaque (110).

12. Le rotor de la revendication 10 ou la revendication 11, comprenant en outre un bouchon vissé (145a) avec une structure cylindrique (145d) comportant un filetage qui s'engage dans un taraudage correspondant (149) du rotor (100).

13. Le rotor de la revendication 12, dans lequel le bouchon vissé (145a) comprend un élément de serrage (145b) qui s'étend d'une surface extérieure (145c) de la structure cylindrique (145d) pour faciliter le serrage du bouchon vissé (145a) par rapport au rotor (100).

14. Le rotor de la revendication 12 ou de la revendication 13, dans lequel chaque bouchon vissé (145a) est placé vers la surface supérieure (114) de la plaque (110).

15. Le rotor de l'une quelconque des revendications précédentes, dans lequel le rotor comprend deux pales (104) et les pales sont inclinées dans des sens mutuellement opposés.

16. Un mélangeur interne comportant au moins une cuve de mélangeage dans laquelle tourne un rotor (100) de l'une quelconque des revendications 1 à 15.

## Patentansprüche

1. Rotor (100) zur Verwendung in einem Innenmischer mit einem Mischbehälter, in dem sich der Rotor dreht, wobei der Rotor Folgendes umfasst:
ein oder mehrere Blätter (104), wobei jedes Blatt eine Spitze (104a) hat, deren Profil eine vordefinierte Krümmung aufweist; und
eine Verschleißschutzvorrichtung, die eine Platte (110) mit einem Profil aufweist, das durch eine vordere Fläche (112) mit einer Krümmung, die zur Krümmung der Spitze (104a) komplementär ist, und eine obere Fläche (114) mit einer Krümmung, die zur Krümmung einer Wand des Behälters komplementär ist, definiert ist, um dazwischen einen Mindestabstandsbereich zu definieren,
der einen Durchgang von Gemisch zwischen der Platte (110) und der Wand des Behälters ermöglicht;
**dadurch gekennzeichnet, dass** die Verschleißschutzvorrichtung lösbar an der Spitze (104a) zumindest eines Blatts befestigt ist, und
**dadurch gekennzeichnet, dass** die Platte einen oder mehrere Kühlkanäle (120) umfasst, die sich axial entlang einer Länge der Platte (110) erstrecken, wobei die Kühlkanäle entlang des Profils der Platte (110) angeordnet und mit Zuführleitungen (122) verbunden sind, die eine entsprechende Kühlflüssigkeit von einer Hauptleitung (124) des Rotors (100) zur Platte (110) fördern.

2. Rotor nach Anspruch 1, wobei das Profil der Platte (110) durch einen Krümmungsradius der Platte definiert ist, der im Uhrzeigersinn immer weiter zunimmt, sodass das Profil der Platte einer Spirale ähnelt.

3. Rotor nach Anspruch 2, ferner umfassend ein Dichtungsmittel.

4. Rotor nach Anspruch 3, wobei das Dichtungsmittel einen O-Ring (150) umfasst, der in eine entsprechende Rille (152) eingesetzt ist.

5. Rotor nach Anspruch 4, wobei die Rille (152) eine trapezförmige Rille ist.

6. Rotor nach einem der vorangehenden Ansprüche, ferner umfassend eine oder mehrere Halteschrauben (137), die in die Platte (110) eingesetzt sind, um mit dem Rotor (100) in Eingriff zu kommen.

7. Rotor nach Anspruch 6, ferner umfassend ein mechanisches Einhaksystem.

8. Rotor nach Anspruch 7, wobei das mechanische Einhaksystem einen Positionierungskeil (130) und ein oder mehrere Schneckenradgetriebesysteme umfasst.

9. Rotor nach Anspruch 8, wobei der Positionierungskeil (130) einen zu einer oberen Fläche (130a) parallelen Keil umfasst, der mit einer entsprechenden Verstärkung (112a) der vorderen Fläche (112) der Platte (110) in Eingriff steht, wobei der Positionierungskeil mit einer entsprechenden Nut der Spitze (104a) in Eingriff steht.

10. Rotor nach Anspruch 8 oder nach Anspruch 9, wobei das Schneckenradgetriebesystem ein Zahnrad (143), ein geschraubtes Axialsperrelement (144) und eine Schraube (145) umfasst, die tangential in den Rotor (100) eingesetzt ist und axial durch das geschraubte Axialsperrelement (144) blockiert wird, so dass die Drehung der Schraube (145) das Zahnrad (143) in Drehung versetzt.

11. Rotor nach einem der Ansprüche 6 bis 10, wobei jede Halteschraube (137) aus einem Schraubenkopf (137a) gebildet ist, der in Richtung der oberen Fläche (114) der Platte (110) angeordnet ist.

12. Rotor nach Anspruch 10 oder Anspruch 11, ferner umfassend einen Schraubverschluss (145a) mit einer zylindrischen Struktur (145d), die ein Gewinde aufweist, das in ein entsprechendes Innengewinde (149) des Rotors (100) eingreift.

13. Rotor nach Anspruch 12, wobei der Schraubverschluss (145a) ein Anzugselement (145b) umfasst, das sich von einer Außenfläche (145c) der zylindrischen Struktur (145d) erstreckt, um das Festziehen des Schraubverschlusses (145a) in Bezug auf den Rotor (100) zu ermöglichen.

14. Rotor nach Anspruch 12 oder nach Anspruch 13, wobei jeder Schraubverschluss (145a) in Richtung der oberen Fläche (114) der Platte (110) angeordnet ist.

15. Rotor nach einem der vorangehenden Ansprüche, wobei der Rotor zwei Blätter (104) umfasst und die Blätter in zueinander entgegengesetzte Richtungen geneigt sind.

16. Innenmischer mit mindestens einem Mischbehälter, in dem sich ein Rotor (100) nach einem der Ansprüche 1 bis 15 dreht.

## Claims

1. A rotor (100) for use in an internal mixer having a mixing vessel in which the rotor rotates, the rotor comprising:
one or more blades (104), each blade having a tip (104a) whose profile has a predefined curvature; and
an anti-wear device comprising a plate (110) with a profile defined by a lower surface (112) with a curvature complementary to that of the tip (104a) and an upper surface (114) with a curvature complementary to that of a wall of the vessel to define, between them, a zone of minimum distance that allows a passage of a mixture between the plate (110) and the wall of the vessel;
**characterized in that** the anti-wear device is detachably fixed to the tip (104a) of at least one blade, and
**characterized in that** the plate comprises one or more cooling channels (120) that extend axially along a length of the plate (110), the cooling channels being arranged along the profile of the plate (110) and connecting to supply conduits (122) that convey a corresponding coolant to the plate (110) from a main conduit (124) of the rotor (100).

2. The rotor of claim 1, wherein the profile of the plate (110) is defined by a radius of curvature of the plate that is increasingly progressive in a clockwise direction so that the profile of the plate resembles a spiral.

3. The rotor of claim 2, further comprising a sealing means.

4. The rotor of claim 3, wherein the sealing means comprises an O-ring (150) that is placed in a corresponding groove (152).

5. The rotor of claim 4, wherein the groove (152) is a trapezoidal groove.

6. The rotor of any of the preceding claims, further comprising one or more retaining screws (137) inserted into the plate (110) to engage the rotor (100).

7. The rotor of claim 6, further comprising a mechanical fastening system.

8. The rotor of claim 7, wherein the mechanical fastening system comprises a positioning key (130) and one or more worm gear systems.

9. The rotor of claim 8, wherein the positioning key (130) comprises a parallel key with a top surface (130a) that engages a corresponding reinforcement (112a) of the lower surface (112) of the plate (110), the positioning key engaging a corresponding top groove (104a).

10. The rotor of claim 8 or claim 9, wherein the worm gear system comprises a gear wheel (143), a screwed axial locking member (144) and a screw (145) tangentially inserted into the rotor (100) and axially locked by the screwed axial locking member (144) so that rotation of the screw (145) causes the gear wheel (143) to rotate.

11. The rotor of any one of claims 6 to 10, wherein each retaining screw (137) consists of a screw head (137a) placed toward the upper surface (114) of the plate (110).

12. The rotor of claim 10 or claim 11, further comprising a screw plug (145a) with a cylindrical structure (145d) having a thread that engages a corresponding thread (149) of the rotor (100).

13. The rotor of claim 12, wherein the screw plug (145a) comprises a clamping member (145b) extending from an outer surface (145c) of the cylindrical structure (145d) to facilitate clamping of the screw plug (145a) relative to the rotor (100).

14. The rotor of claim 12 or claim 13, in which each screw plug (145a) is placed toward the upper surface (114) of the plate (110).

15. The rotor of any of the preceding claims, wherein the rotor comprises two blades (104) and the blades are inclined in mutually opposite directions.

16. An internal mixer having at least one mixing vessel in which a rotor (100) of any one of claims 1 to 15 rotates.
